(19) Europäisches Patentamt
European Patent Office
Office européen des brevets

(11) Publication number: **0 036 914**
**B1**

(12) **EUROPEAN PATENT SPECIFICATION**

(45) Date of publication of patent specification: **19.09.84**

(51) Int. Cl.$^3$: **B 23 Q 35/123,** G 05 B 19/42, G 05 B 19/18

(21) Application number: **80300883.8**

(22) Date of filing: **21.03.80**

(54) **Tracer control equipment.**

(43) Date of publication of application:
**07.10.81 Bulletin 81/40**

(45) Publication of the grant of the patent:
**19.09.84 Bulletin 84/38**

(84) Designated Contracting States:
**DE FR GB**

(56) References cited:
**GB-A-2 017 344**
**US-A-3 920 972**

**Werkzeugmaschinen Manfred Weck-Düsseldorf 1982, VDI Verlag (Studium und Praxis), Band 3, page 155, 156**

(73) Proprietor: **FANUC LTD**
**5-1, Asahigaoka 3-chome Hino-shi**
**Tokyo 191 (JP)**

(72) Inventor: **Imazeki, Ryoji**
**987-44, Naganuma-cho**
**Hachioji-shi Tokyo (JP)**
Inventor: **Yamazaki, Etuo**
**No. 566-93, Shimoongata-cho**
**Hachioji-shi Tokyo (JP)**

(74) Representative: **Bedggood, Guy Stuart et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 036 914 B1**

**Description**

This invention relates to a tracer control equipment.

A tracer control equipment is usually operable in any selected one of several tracing modes, but requires parameters necessary for the tracing operation, such as, for example, a tracer reference displacement, a tracing axis, a direction of tracing, a pick feed value, various limits and so forth. The parameters to be set differ in combination for each mode of tracing operation.

Accordingly, it is necessary for an operator to set the parameters after selecting them in accordance with the tracing mode adopted and then to check whether the parameters have each been set or not.

Usually the parameters are set by means of dials, switches or the like, and in the case of a tracer control equipment using a processor, they are entered manually as from a keyboard. But is very cumbersome to check each of required parameters corresponding to the tracing mode selected, and it is impossible to check whether setting of the required parameters has been completed or not; accordingly, cases are often met with in which some of the required parameters are left unset.

According to the present invention there is provided tracer control equipment which is selectively operable in a plurality of trace modes for tracing a model, comprising:

means for calculating trace direction and trace velocity from displacement signals of a tracer head tracing the model surface during a selected tracing operation corresponding to a selected one of said trace modes;

trace mode selecting means for selecting one of said plurality of trace modes; and

means not selectively setting the value of each of a respective set of parameters for defining a selected tracing operation for a selected trace mode;

characterised in that the equipment further comprises display means for displaying a respective set of parameters for defining a selected trace operation for a selected trace mode;

the parameter-value setting means being operable for setting the values of the parameters of the set concerned during display of those parameters on the display means.

The present invention can provide a tracer control equipment which permits easy and accurate setting of parameters and allows ease in checking of the values of the parameters being set and in checking the parameters required for individual tracing modes.

Reference will be made, by way of example, to the accompanying drawings, in which:—

Fig. 1 is a block diagram illustrating an embodiment of the tracer control equipment of the present invention;

Fig. 2 is a detailed front view of an operator panel used in the embodiment of Fig. 1;

Fig. 3 is a block diagram showing the character display utilized in Fig. 1;

Figs. 4 to 21 are explanatory of examples of displays on the character display; and

Fig. 22 is explanatory of a both way scan tracing operation.

Fig. 1 illustrates in block form an embodiment of the present invention. In Fig. 1, reference character DG indicates a displacement-calculation circuit which is supplied with displacement signals $\varepsilon_x$, $\varepsilon_y$ and $\varepsilon_z$ available from a tracer head TR; ARN and ART designate arithmetic units; ADD identifies an adder; DC denotes a distributor; COMP represents a comparator GC shows a gate; DRVX, DRVY and DRVZ refer to amplifiers; MX, MY and MZ indicate servo motors; PCX, PCY and PCZ designate position detectors; MDL identifies a model; ST denotes a stylus; CT represents a cutter; W shows a workpiece; MAC refers to a tracing machine; CTX, CTY and CTZ indicate reversible counters for counting pulses from the position counters to indicate the current position of the stylus; OPP designates an operator panel; KB identifies a keyboard; DPL denotes a character display; KBP represents a keyboard panel; CNP shows a control panel; DI refers to a data input unit; MEM indicates a memory composed of a memory part M0 for a control program, a work memory part M1, a memory part M2 for picture information, a memory part M3 for formats of parameters and a memory part M4 for data of parameters; DO identifies a data output unit; CPU denotes a processor; DA1 to DA4 represent D—A converters; and AD shows an A—D converter.

From the displacement signals $\varepsilon_x$, $\varepsilon_y$ and $\varepsilon_z$ produced in accordance with the displacement of the stylus ST contacting the model MDL, the displacement calculation circuit DG derives a composite displacement signal,

$$\varepsilon=\sqrt{\varepsilon_x^2+\varepsilon_y^2+\varepsilon_z^2}.$$

The composite displacement signal $\varepsilon$ is provided to the adder ADD to obtain a difference $\Delta\varepsilon$ between the composite displacement signal $\varepsilon$ and a reference displacement signal $\varepsilon_0$. In the arithmetic circuits ARN and ART there are produced a normal-direction velocity signal $V_N$ and a tangential-direction velocity signal $V_T$ respectively. The distributor DC provides a velocity command signal in accordance with direction-of-displacement signals $\sin\theta$ and $\cos\theta$ applied from the D—A converter DA1 and supplies the velocity command signal to the gate GC. The velocity command signal is fed to that one of the amplifiers which is selected by the gate GC, and the servo motor corresponding to the selected

amplifier is driven in response to the velocity command signal, bodily feeding the cutter CT and the tracer head TR. No detailed description will be given of these operations.

According to this embodiment of the present invention, various parameters necessary for the tracing operation are entered from the keyboard KB or the like of the operator panel OPP and stored in the memory MEM, and in response to the tracing operation, the data are read out from the memory MEM to control the tracing path. In a tracer control equipment, the parameters for the tracing operation are displayed on the character display DPL provided on the operator panel OPP and the values of parameters entered by the operator from the keyboard KB is displayed on the character display DPL to allow ease in checking of the parameters necessary for the tracing operation, entering of the required parameters and checking of the set values. As to the various parameters, use can be made of such parameters as shown in the following table.

TABLE 1

| Item | Parameter | Item | Parameter |
|---|---|---|---|
| 1) | Reference displacement | 9) | Pick feed velocity |
| 2) | Trace axis | 10) | Pencil trace |
| 3) | Trace direction | 11) | 45° trace |
| 4) | Trace velocity | 12) | Z-axis pick feed |
| 5) | Pick feed direction | 13) | Cutting mode (finish/rough) |
| 6) | Pick feed axis | 14) | Auto return |
| 7) | Pick feed value | 15) | Z-axis reference displacement |
| 8) | Pick feed method | 16) | Various limits |

Fig. 2 shows the operator panel OPP, which comprises the keyboard panel KBP and the control panel CNP. On the keyboard panel KBP there are provided the cathode ray tube type display DPL for displaying various parameters, various keys and pilot lamps; on the control panel CNP there are provided switches including mode setting switches, push buttons, dials and pilot lamps.

Input information entered from the various switches, the push buttons and the dials on the operator panel OPP can be read out by the processor CPU via the data input unit DI and the bus BUS, and predetermined data can be displayed on the display of the operator panel OPP from the processor CPU via the bus BUS and the data output unit DO. A description will be given of respective elements of the control panel CNP and the keyboard panel KBP.

Control panel CNP

(1) Mode switch 201

Setting this switch to "manual", jog feed, rapid feed and handle feed are possible. In an "auto" mode, tracing, program control, MDI and programming are possible.

(2) Jog switches 202~204

With manual mode selected and jog switch ON, jog feed is effected in the direction of an axis being designated. In the "auto" mode, an approach is effected in the direction of the designated axis. Upon contacting of the stylus of the tracer head with the model, the approach is decelerated and when the displacement of the tracer head reaches $2\varepsilon_0 / 3$, the approach comes to an end.

(3) Rapid button 205

Depressing this button concurrently with the jog button in the "manual mode", rapid feed takes place.

(4) Jog velocity dial 206

The velocities of jog feed, approach operation, clamp tracing, rapid feed in one way tracing, automatic return after tracing and Z-axis pick feed are changed by this potentiometer.

(5) Zero return button 207

Turning ON this button and then the jog switch, rapid feed is effected in the designated axis-direction. When the zero point of the machine is reached, the feed is stopped.

(6) Single block button 209

Turning ON this button, the machine stops after execution of one block of a program in program running. In the case of tracing operation, the machine stops after execution of one sequence.

(7) Approach end indication 210

(8) Start button 211

Tracing, program and MDI can be started. Re-start in single block and in feed hold is possible.

(9) Feed hold button 212

Tracing, program and MDI can be stopped temporarily. Re-start is effected by depressing the start button.

(10) Tracing override dial 213

The velocity of tracing and pick feed can be overriden.

(11) Gain setting dial 214

The sensitivity in the direction of pencil tracing and in the Z-axis in manual tracing and in three-dimensional tracing can be changed.

(12) Limit setting switch 215

This switch is used for setting limits. When the switch is set to any of LXP to LCZ, the address of the selected limit is searched in the control equipment. When the switch is set to WLP or WLN, an area of a potential line is secured in a memory provided in the control equipment. With the switch set to CHECK, when a limit in the axis-direction of manual feed is reached, the manual feed is stopped and the limit set position can be checked with the actual position of the machine. If the switch is set to PROGRAMMED during tracing, then the limit being monitored is searched in the tracing state.

(13) Store enable button 216, setting button 217

Depressing the setting button with the store enable button in the ON state, the position of the machine can be stored at the limit selected by a selector. In this case, if the limit setting switch 215 is set to CHECK, a sequence of tracing also proceeds to the next sequence. During tracing, when the store enable button is OFF, the depression of an advance button causes the sequence of tracing to proceed to the next sequence. At this time, however, data of limit is not rewritten.

(14) Start button 218, stop button 219

These buttons are used for turning ON and OFF the power supply.

(15) Emergency stop button 220

Depressing this button, feed is stopped instantaneously and all information is cleared.

Keyboard panel KBP

When the mode switch 201 of the control panel CNP is set to AUTO and is selected, the following operations are possible.

(1) Tracing mode button 221

When ON selects TRACING modes, and different tracing modes can be selected (see below)

(2) Program control mode button 222

Programmed running.

(3) Mode button 223

One block of data can be entered. The block is executed by depression of the start button,

(4) Programming mode button 224

This button is depressed for programming the programmed running.

Switching the tracing mode switch to TRACING, any one of tracing modes mentioned below in items (5) to (10) can be selected;

(5) Manual trace mode button 225

Turning ON this button, manual trace is possible.

(6) Both ways scan trace mode button 226

Turning ON this button, both ways scan trace is possible.

(7) One way scan trace mode button 227
Turning ON this button, one way scan trace is possible.

(8) 360° contour trace mode button 228
Turning ON this button, 360° contour trace is possible.

(9) Partial contour trace mode button 229
Turning ON this button, partial contour trace is possible.

(10) Three-dimensional trace mode button 230
Turning ON this button, three-dimensional trace is possible.

In the case where the program control button is ON and the trace mode is selected in that program, a lamp is lighted to indicate the tracing mode during the execution of that program.

CRT Scanning
(1) Parameter button 231
Depressing this button, the parameters to be set for the selected one of the tracing modes is displayed on CRT.

(2) Limit button 232
Depressing this button, the limits to be set for the selected one of the tracing modes is displayed on CRT.

(3) Main program button 233
Depressing this button, a first page of a main program is displayed on CRT.

(4) Position button 234
Depressing this button, the current position of the tracer head is displayed in characters three times larger than the other information on CRT.

(5) Deflection button 235
Depressing this button, the displacement of the tracer head is displayed in characters three times larger than the other information on CRT.

(6) Alarm button 238
This is depressed for displaying the contents of various alarms on CRT.

(7) Diagnose button 237
This is depressed for displaying signals from and to the machine and various system parameters on CRT.

(8) Cursor buttons 239 and 240
Depressing these buttons, a cursor "-" in the lowest line of CRT moves laterally.

(9) Ten-keys 241 to 252, address keys 253 to 261
A character can be displayed by bringing the cursor to a required position and writing by the address keys or ten-keys.

(10) Input button 262
Depressing this button, data written in the lowest line of CRT is inputted to the corresponding position and rewritten. In the case of alternative (X/Y), the cursor is brought to the position of the initial of the word desired to select and then this button is depressed, by which the selected word is replaced as data at the corresponding position.

(11) Page button 263
A program or the like cannot be displayed in one picture and extends over several pictures. Depressing this button, the page of the program is changed.

(12) Alarm display 264
Occurrence of various alarms is indicated by lighting a lamp.

(13) Clear button 265
The cause of an alarm is removed by this button to restore control. Depressing this button during running, the control equipment is entirely cleared to be returned to its initial state.

(14) Battery display 266

This is lighted when the voltage of a battery backing up the memory goes below a certain value.

Fig. 3 is a block form illustrating in detail the character display DPL utilized in Fig. 1.

Reference character CRT indicates a cathode ray tube type display; CM designates a character memory for storing character information of one picture; CAC identifies a character address counter; CLK denotes a clock generator; CRTC represents a CRT control unit; MPX shows a multiplexer; CG refers to a character generator; PSC indicates a parallel-serial converter; CD designates character information; CRD identifies cursor position information; CHC denotes a character clock; DOT represents a dot clock; WAD shows write address information; RAD refers to read address information; HC indicates a horizontal deflection signal; VC designates a vertical deflection signal; CRS identifies a cursor display signal; and VID denotes a video signal.

When one tracing mode is selected on the operator panel OPP, this information is read out by the processor CPU via the data input unit DI and the bus BUS, and under the control of a control program stored in the memory M0, the corresponding picture information stored in the picture information memory M2 is read out for input to the character memory CM via the data output unit DO. The picture information is written in the character memory CM by providing the write address information WAD to the address counter CAC via the data output unit DO and the character information CD successively read out from the memory M2 to the character memory CM.

The read address information RAD from the control unit CRTC is supplied via the multiplexer MPX to the character memory CM. By accessing the character memory CM cyclically from its leading to last address, the character information is successively read out therefrom and applied to the character generator CG. The character generator CG converts the character information to dot information, which is provided to the parallel-serial converter PSC, wherein it is converted to a serial signal synchronized with a dot clock to provide the video signal VID for display on the CRT display. The video signal VID is displayed on the CRT display CRT under the control of the horizontal and vertical deflection signals HC and VC, with the result that the character information of one picture stored in the character memory CM is displayed on the CRT display.

The picture information memory M2 has stored therein various parameters (described in detail later) necessary for the selected tracing operation, the operator enters the values of the required parameters one after another from the keyboard KB while observing the parameters displayed on the CRT display CRT. In this case, upon entering by the operator the codes indicating the required parameters, the processor CPU reads out from the parameter format memory M3 the parameter format information corresponding to each of the specified parameters and successively writes the respective information in specified areas of the character memory CM for display in a parameter format display area (for example, in the last line of the picture) of the CRT display CRT.

After checking the parameter format displayed on the CRT display, the operator enters data of the parameter, that is, enters numeric data or specifies address information. The data of the parameter thus entered is stored temporarily in the work memory M1 and, at the same time, written in the character memory CM so that it is displayed on the CRT display CRT. When the operator depresses the input button after making sure on the CRT display that the data of the parameter entered is correct, the data of the parameter is stored in the data memory M4. At the same time, the data of the parameter stored in the parameter format display area of the character memory CM is erased and the data of the newly adopted parameter is written in the address position corresponding to a parameter data display area, by which the parameter data display position on the CRT display is shifted.

The format information stored in the parameter format memory M3 is capable of including alternative information such, for example, as X/Y/Z or ON/OFF other than the information requesting the entering of such a numeric data as mentioned above. In this case, by depressing the cursor button on the operator panel, it is possible that the processor CPU modifies the cursor data CRD to change the timing of the cursor signal CRS, thereby to successively shift the cursor display position on the CRT display in the row direction. Accordingly, by depressing the cursor button after bringing the cursor to the position where the data of the parameter to be selected is displayed, the data of the parameter can be entered.

Of the parameter format information read out from the memory M3 and stored in the work memory M1, the data designated by the cursor is written in a parameter display area of the character memory CM in response to the operation of the input button and the data display position is shifted in the same manner as described above and the data is stored as parameter setting data in the memory M4.

Now, a description will be given of the tracing operation modes (six modes in the embodiment of the present invention) and picture information which is displayed on the CRT display corresponding to each mode.

(1) Manual trace mode

By depressing the buttons 221 and 225 to select the tracing mode and the manual trace mode

and then depressing the parameter button 231 on the keyboard KBP in Fig. 2, a picture information shown in Fig. 4 is displayed on the CRT display CRT.

In Fig. 4, characters underlined are stored in the picture information memory M2 and indicate the picture information read and displayed in response to the depression of the abovesaid buttons. That is, the name of mode (MANUAL TRACE) is displayed in a first line; the line number (01), the reference displacement $\varepsilon_0$ (DEFLECTION) indicating the kind of data, a colon (:) and the unit (millimeter=MM) are displayed in a second line; and the last line is assigned for a display of the input of data of a parameter.

In the case where it is desired to set, for example, 0.200 MM, as the reference displacement $\varepsilon_0$, if the line number 01 is entered by the numeric keys, then the parameter format data corresponding to the reference displacement is read out from the parameter format memory M3 in response to the line number 01 and this data is displayed in the last line of the CRT display as follows:

01=

Then, entering 0.200 by the numeric keys, it is stored in the work memory M1 and, at the same time, the numerals are displayed one after another at the position next to the above display in the last line of the CRT display. Next, depressing the input button 262, this data is stored as the data of the reference displacement $\varepsilon_0$ at the corresponding address position in the data memory M4 and the content of the character memory is rewritten and erased and the display of the numerical value 0.200 is shifted to the first line, erasing the display in the last line.

(2) Both ways scan trace mode

Depressing the buttons 221 and 226 to designate the both ways scan trace and the depressing the parameter button 231, parameters necessary for this tracing mode are displayed as shown in Fig. 5. In Fig. 5, parameters such as trace direction, trace velocity, pick feed value, pick feed method, pick feed velocity, pencil tracing, 45° trace, cutting mode, auto return and diagonal copy, i.e. tracing in an arbitrary direction are displayed in the third line et seq, along with line numbers 02 et seq.

These picture information are those stored in the picture information memory M2 corresponding to this mode and they are displayed on the CRT display in response to the designation of the abovesaid mode. With respect to the parameters with the line numbers 02, 05, 07, 08, 09, 10 and 11, by entering the line numbers by the numeric keys, the parameter format information of Table 2 stored in the parameter format memory M3 can be read out in a sequentially order and displayed in the last line.

TABLE 2

| Line number | |
|---|---|
| 02 | +X/−X/+Y/−Y |
| 05 | AXIS/TANGENTIAL/TIMER |
| 07 | OFF/ON |
| 08 | OFF/ON |
| 09 | FINE/ROUGH |
| 10 | OFF/ON |
| 11 | OFF/ON |

In the case of setting, for example, the direction +X as the trace direction, when the line number 02 is entered, parameter format information shown in Fig. 6 is read out from the memory M6 and is temporarily stored in the memory M1. This information is written in the character memory CM and displayed in the last line of the CRT display. On the other hand, the processor CPU imparts the cursor position information CRD to the control unit CRTC to command it so that the cursor display CRSP may be provided at the position of an nth character (the position of the sign + of +X in the illustrated example) of first data. In the case where the operator sets the trace direction +X, the input button 262 is depressed in the abovesaid state, by which the data is stored as trace direction data in the memory M4 and, at the same time, it is written at the corresponding address position of the character memory for displaying +X in the third line of the CRT display.

In the case where it is desired to set some other direction, the processor CPU provides, upon each depression of the cursor botton 240, the cursor position information CRD to the control unit CRTC so that the cursor position CRSP shifts in the order −X→+Y→−Y; therefore, it is sufficient to depress the input button 262 after setting the cursor position to the data desired to select.

(3) One way scan trace mode

Depressing the buttons 221 and 227 to select the one way scan trace mode and then depressing the parameter button 231, there is provided such a parameter display as shown in Fig. 7.

In the lines of the line numbers 11 and 12, parameters such as upward trace and slow approach are displayed respectively. The parameter format information therefor is as shown in the following table.

TABLE 3

| Line number | Parameter format information displayed |
|---|---|
| 11 | OFF/ON |
| 12 | Z/XY |

(4) 360° contour trace mode

Depressing the buttons 221 and 228 and then the parameter button 231, there is provided such a display as shown in Fig. 8. The line number 02 represents the trace direction and the line number 07 represents the Z axis pick feed, and the parameter format information therefor are as shown in Table 4.

TABLE 4

| Line number | Parameter format information displayed |
|---|---|
| 02 | LEFT/RIGHT |
| 07 | OFF/ON |

(5) Partial contour trace mode

Depressing the parameter button 231, parameters shown in Fig. 9 are displayed.

(6) Three-dimensional trace mode

Depressing the buttons 221 and 230 and the parameter button 231, parameters shown in Fig. 10 are displayed.

Next, a description will be made of setting and display of various limits.

(1) Manual trace mode

Depressing the buttons 221 and 225 and the limit button 232, a picture shown in Fig. 11 is read out from the memory M2 and displayed on the CRT display.

Positive and negative trace stroke limits LXP and LXN in the X-axis direction are spaced apart in the lateral direction on the CRT display, and positive and negative trace stroke limits LYP and LYN in the Y-axis direction are spaced apart in the vertical direction, with the co-ordinate axis 111 displayed. The trace stroke limits in the X- and Y-axes are displayed two-dimensionally in the form of an area diagram.

LRP and LCZ indicate an auto return end limit and a clamp limit respectively, and the format information representing the respective limits are displayed with limit number 01 to 04, 07 and 09 attached thereto.

Designating the limit number by the numeric keys, the designated limit number and the parameter format information corresponding thereto are displayed in the last line in accordance with the following Table 5.

TABLE 5

| Limit number | Parameter format information displayed |
|---|---|
| 01 | =/OFF |
| 02 | =/OFF |
| 03 | =/OFF |
| 04 | =/OFF |
| 07 | =/OFF |
| 09 | =/OFF |

The blank between the equality sign and the slash instructs the operator to enter numeric data; when entered by the operator using the numeric keys, the numeric information is once stored in the memory M1 and, at the same time, provided to the character memory CM and displayed in the last line of the CRT display. When the operator depresses the input button 262, this numeric data is stored as limit data of the designated limit number in the data memory M4 and written in the character memory CM so that it may be displayed near the limit display and the limit number display position (in the next line in the illustrated example) on the CRT display.

The display OFF is to erase previously entered limit data from the display screen and invalidate stored data. When entering the limit number, if the limit data is already entered, it is displayed; but, by depressing the input button 262, with the cursor set to the initial of "OFF", the limit data corresponding to the limit number is erased from the data memory M4 and the character memory CM, resulting in the display on the CRT display being erased.

(2) Both ways scan trace mode

Depressing the buttons 221 and 226 and the limit button 232, various limits shown in Fig. 12 are displayed. In Fig. 12 there are shown a limit wire WL and positive and negative Z-axis tracing stroke limits LPZ and LNZ in addition to the limit shown in Fig. 11.

The limit wire provides a line imparting a potential on the model and, by a signal produced when the stylus of the tracer head runs across this line, the sequence is switched. The parameter format data is as follows:

OFF/ON

By depressing the page button 263 of the operator panel OPP, the next page is displayed as shown in Fig. 13.

Fig. 13 shows the co-ordinate value of the point where pick feed is effected. X indicates the X-axis co-ordinate value and WLPY the Y-axis co-ordinate value. In this example, the Y-axis limit means the start of pick feed.

(3) One way scan trace mode

Depressing the buttons 221 and 227 and the limit button 232, such a limit display as shown in Fig. 14 is provided. In this display, a slow approach limit LRA is added.

(4) 360° contour trace mode

Depressing the buttons 221 and 228 and the limit button 232, there is provided such a limit display as depicted in Fig. 15.

In Fig. 15, LXP and LYP respectively indicate a pick feed limit, and LZP and LZU respectively indicate a Z-axis limit for trace ending use.

(5) Partial contour trace mode

By depressing the buttons 221 and 229 and the limit button 232, there is produced such a limit display as depicted in Fig. 16. In this example, LXP, LXN, LYP and LYN respectively indicate trace turning limits.

(6) Three-dimensional trace mode

By depressing the buttons 221 and 230 and the limit button 232, there is provided such a limit display as shown in Fig. 17. In this example, LXP and LYP indicate trace end limits.

Input and display of main program information

By depressing the button 224, a programming mode is provided; by depressing the main program button 233, such a picture as shown in Fig. 18 is displayed on the CRT display; and by depressing the sub-page button, such a picture as depicted in Fig. 19 is displayed on the CRT display. In other words, the picture information of a main program is read out from the memory M1 and displayed on the CRT display.

In Figs. 18 and 19, G00 indicates positioning by rapid feed, G01 positioning by cutting velocity, G10 repetitive trace control, a numerical value 99 an incremental value specify code and F the feedrate. The others are the same as those already explained.

Also in this example, only the underlined characters are displayed initially and, as in the case of the parameters described previously, the format information for program data is displayed, by specifying the line number, in the last line of the CRT display and desired program can be entered, stored and displayed in the same manner as described previously.

Display of machine position information

By depressing the position button 234, the current position of each axis and the setting position of the limit now monitored by the tracer control equipment can be displayed as shown in Fig. 20.

That is, the abovesaid current position is displayed by reading out the contents of current position counters CTX, CTY and CTZ via the data input unit DI and writing them in the character memory CM via the data output unit DO. The limit being monitored is displayed by writing in the character memory CM via data output unit DO the limit data read out by the processor CPU from the data memory M4 and stored in the work memory M1 for comparison with the current position information.

Display of tracer head displacement information

By depressing the deflection button 235, a displacement value E ($\varepsilon$ in Fig. 1), an error signal ED ($\varepsilon$—$\varepsilon_0$ in Fig. 1), a Z-axis displacement value EZ ($\varepsilon_z$ in Fig. 1) and a gravity-axis displacement value EG ($\varepsilon_z$ in Fig. 1) of the tracer head can be displayed on the CRT display as shown in Fig. 21. That is, the displacement value $\varepsilon$ and the Z- or gravity-axis displacement value $\varepsilon_z$ of the tracer head is read out by the processor CPU via an OR gate OR and the A—D converter AD, and the error signal $\varepsilon$—$\varepsilon_0$ is obtained by calculation from the reference displacement value $\varepsilon_0$ preset in the data memory M4 and the read displacement value $\varepsilon$. These data are written in the character memory of Fig. 2 via the data output unit DO and displayed as shown in Fig. 21.

Another method of entering various limit information

The various limit information may also be entered in the following manner: By moving the machine in the manual mode and depressing the set button at a suitable instant in consideration of the positional relationship between the tracer head and the model, the current position at that time is stored as the limit information.

That is, for example, by setting the mode switch 201 to "MANUAL", depressing the store enable button 216, setting the limit setting dial 215 to LXP and turning down the X-axis jog switch 202 to the right in Fig. 2, the processor CPU provides via the data output unit DO to the D—A converter DA5 velocity information dependent on the velocity designated by the feed-rate dial 206 and causes the gate GC to select the axis designated by the jog switch 202, performing +X-axis feed. With the movement of the machine in the +X-axis direction, the content of the counter CTX is updated, and at the instant when the set button 217 was depressed, the content of the counter CTX is read out by the processor CPU and stored as X-axis stroke limit data in the memory M4. Each limit information can be entered by presetting the limit setting switch 215 to a desired item and effect the same manual operation as described above.

Next, the tracing operation will be described with reference to the case of both ways scan trace shown in Fig. 22. Assume that the various parameters described previously in connection with Fig. 5 are all set and stored in the memory M4.

In Fig. 22, reference numeral 220 indicates a tracing path of the tracer head. Let it be assumed that the tracer head is positioned by the approach operation at the start point S prior to the start of automatic tracing.

Upon depression of the start button 221, the automatic tracing operation is started. That is, the processor CPU reads out the preset reference displacement $\varepsilon_0$ from the memory M4 and provides it via the D—A converter DA2 to the adder ADD, from which the error signal $\Delta\varepsilon=\varepsilon-\varepsilon_0$ is applied to the arithmetic units ARN and ART. The respective axis displacement components $\varepsilon_x$, $\varepsilon_y$ and $\varepsilon_z$ of the tracer head are read out by the processor CPU via the A—D converter AD to calculate the direction-of-displacement signals $\sin\theta$ and $\cos\theta$, which are provided via the D—A converter DA1 to the dispatcher DC, wherein the feedrate of each axis motor is determined. The feedrate data is read out from the memory M4 and applied via the data output unit DO and the D—A converter DA3 to the arithmetic circuit ART to determine its output level, producing a tangential velocity $V_T$ in accordance with the feedrate data. The trace direction has been designated to be +X and, based on this trace direction, the processor CPU changes over the gate GC to achieve tracing in the direction +X.

The processor CPU reads out the content of the X-axis counter CTX with a suitable period and compares it with the value of the set X-axis, positive limit (a tracing stroke limit) LXP and, in the case of coincidence, proceeds to the Y-axis pick feed. Namely, until pick feed of the set value is effected, a predetermined numerical value corresponding to the set velocity is written in the D—A converter DA4 and the gate GC is switched, whereby to perform pick feed along the set axis (Y-axis). When the content of the Y-axis counter CYT varies by the set pick feed value during pick feed, the processor CPU shifts to backward trace in the —X axis direction.

In the backward trace, the processor CPU monitors the data of the limit LXN read out from the data memory M4 and the current position information in the X-axis read from the counter CTX, and when they match with each other, the operation is shifted to the Y-axis pick feed again. Similarly, upon completion of the Y-axis pick feed, the forward trace in the direction +X is resumed. In this way, both ways scan trace is carried out repeatedly, and when the content of the counter CTY matches with the value of the set limit LYP (a point TE), the processor CPU stops the trace operation and switches the drive axis to the Z-axis and stops the tracer head from movement when the Z-axis current position matches with the limit LRP.

As has been described in the foregoing, according to the present invention, since parameters necessary for the tracing operation can be displayed on a character display, it is possible to easily check

the parameters and ensure their setting; furthermore, since data of entered parameters can easily be checked, the data can be set without fail.

In a tracer control equipment, parameters necessary for a trace operation, such as, for example, a tracer head reference displacement value, a trace axis, a trace direction, a pick feed value and various limits, are set in respective combinations appropriate each respective different trace mode. A character display is provided for displaying various parameters so that it is easy to confirm each of required parameters corresponding to a selected trace mode and check whether the setting of the required parameters has been completed or not and whether the value of each set parameter is desired one or not.

## Claims

1. Tracer control equipment which is selectively operable in a plurality of trace modes for tracing a model (MDL), comprising:

means (DG, ADD, ARN, ART etc) for calculating trace direction and trace velocity from displacement signals ($\varepsilon x$, $\varepsilon y$, $\varepsilon z$) of a tracer head (TR) tracing the model surface during a selected tracing operation corresponding to a selected one of said trace modes;

trace mode selecting means (OPP, 201, 221, 225 to 230 etc) for selecting one of said plurality of trace modes; and

means (241 to 262 etc) for selectively setting the value of each of a respective set of parameters for defining a selected tracing operation for a selected trace mode;

characterised in that the equipment further comprises display means (DPL etc) for displaying a respective set of parameters for defining a selected trace operation for a selected trace mode;

the parameter-value setting means (241 to 262 etc) being operable for setting the values of the parameters of the set concerned during display of those parameters on the display means.

2. Tracer control equipment as claimed in claim 1, wherein the display means are operable to display trace limits, which are parameters used in defining a selected tracing operation, in the form of an area diagram.

3. Tracer control equipment as claimed in claim 1 or 2, wherein the display means are operable to display an identification code in correspondence to each parameter displayed, and wherein a parameter a value of which is to be set by the parameter-value setting means is identified by inputting the identification code displayed in correspondence to the parameter concerned, the display means having an input data display area wherein such an input identification code is displayed.

4. Tracer control equipment as claimed in claim 1, 2 or 3, wherein the display means are operable to display a tracing operation end position, which is a parameter used in defining a selected tracing operation, during each sequence of the selected tracing operation.

5. Tracer control equipment as claimed in any preceding claim, wherein the display means are operable selectively to display at least one of: a displacement value $\varepsilon$, a displacement error signal $\varepsilon - \varepsilon o$, a Z-axis displacement value and a gravity axis displacement value for the tracer head (TR).

6. Tracer control equipment as claimed in any preceding claim, comprising:

an analog-to-digital converter (AD) arranged for receiving displacement signals ($\varepsilon x$, $\varepsilon y$, $\varepsilon z$) from the tracer head (TR) for conversion thereof to digital data,

counter means (CTx, CTy, CTz) for receiving positional information indicating the position of a tracer had (TR);

a keyboard (KB) for inputting data to the equipment;

format memory means (M3), for storing format information indicating for each of the plurality of trace modes the format of each of the parameters of the set for defining a selected tracing operation for the trace mode, operatively connected to the trace mode selecting means and the display means;

data memory means (M4, CM) for receiving and storing data input from the keyboard;

processor means (CPU, MO) operable to store programs and to selectively generate commands in accordance with a program corresponding to a selected trace mode, operatively connected to the display means, the analog-to-digital converter, the counter means, the keyboard, and the data memory means, for receiving information and data therefrom and for receiving program data from the keyboard; and

data output means (DO) operatively connected to the processor means and the trade mode selecting means for transmitting commands from the processor means to control the tracer head in dependence upon the selected program, data stored in the data memory means, and data and information from the analog-to-digital converter and the counter means.

7. Tracer control equipment as claimed in claim 6, wherein the processor means and display means are selectively operable so that program data is displayed on the display means.

8. Tracer control equipment as claimed in claim 7, comprising input button means (262) operatively connected to the keyboard, the display means, the processor means and the data memory means, for transmitting parameter values or program data displayed on the display means to memory or to the processor means on operation of the input button means, the display means being operable to display immediately data input at the keyboard.

9. Tracer control equipment as claimed in claim 6, 7 or 8, further comprising manual control means (202 to 204) operable to specify a desired direction of motion of the tracer head, the data output means being operatively connected thereto for transmitting appropriate control signals in dependence upon the specified direction of motion.

10. Tracer control equipment as claimed in claim 6, 7, 8 or 9, comprising set button means (234) operatively connected to said counter means for transmitting positional information therefrom to memory on operation of the set button means.

11. Tracer control equipment as claimed in claim 6, 7, 8, 9 or 10, wherein the display means are adapted to display a cursor element and comprise cursor control means (CRTC etc), operatively connected to the processor means and the keyboard, for controlling the position of the cursor element on the display, the position of the cursor element indicating the parameter of which a value is to be input from the keyboard.

12. Tracer control equipment as claimed in claim 6, comprising a character memory (CM) for storing information for display of parameters in the formats appropriate thereto,

a character address counter (CAC) for addressing memory locations in the character memory for writing such information therein,

a control unit (CRTC) for addressing memory locations in the character memory for reading out such information for display,

a character generator for generating display characters in accordance with such read out information.

**Patentansprüche**

1. Steuerungsvorrichtung für eine Kopierausrüstung, die wahlweise in einer Vielzahl von Kopierbetriebsarten zum Kopieren eines Modells (MDL) betreibbar ist, mit Mitteln (DG, ADD, ARN, ART usw.) zum Berechnen der Kopierrichtung und der Kopiergeschwindigkeit aus Verschiebungssignalen ($\varepsilon x$, $\varepsilon y$, $\varepsilon z$) eines Kopierkopfes (TR), der die Modelloberfläche während einer ausgewählten Kopieroperation, die mit einer ausgewählten aus der Vielzahl der Kopierbetriebsarten korrespondiert, abfühlt, mit Kopierbetriebsart-Auswahlmitteln (OPP, 201, 221, 225 ... 230 usw.) zum Auswählen einer aus der Vielzahl von Kopierbetriebsarten und mit Mitteln (241 ... 262 usw.) zum wahlweisen Einstellen des Wertes jedes Parameters eines betreffenden Satzes von Parametern zum Bestimmen einer ausgewählten Kopieroperation für eine ausgewählte Kopierbetreibsart, dadurch gekennzeichnet, daß die Steuerungsvorrichtung desweiteren eine Anzeigeeinheit (DPL usw.) mit Anzeigemitteln zum Anzeigen eines betreffenden Satzes von Parametern zum Bestimmen einer ausgewählten Satzes von Parametern zum Bestimmen einer ausgewählten Kopieroperation für eine ausgewählte Kopierbetreibsart enthält und daß die Mittel (241 ... 262 usw.) zum Einstellen der Werte der Parameter des Satzes von Parametern, der während der Anzeige dieser Parameter mittels der Anzeigemittel in Betracht kommt, betätigbar sind.

2. Steuerungsvorrichtung nach Anspruch 1, dadurch gekennzeichnet, daß die Anzeigemittel derart betreibbar sind, daß sie die Kopierbereiche, die Parameter sind, welche benutzt werden, um eine ausgewählte Kopieroperation zu bestimmen, in Form eines Bereichsdiagramms anzeigen.

3. Steuerungsvorrichtung nach Anspruch 1 oder 2, dadurch gekennzeichnet, daß die Anzeigemittel derart betreibbar sind, daß sie einen Identifizierungscode in Übereinstimmung mit jedem der angezeigten Parameter anzeigen, und daß ein Parameter, dessen Wert durch die Mittel zum Einstellen der Parameterwerte einzustellen ist, durch Eingabe des Identifizierungscodes, der in Übereinstimmung mit dem betreffenden Parameter angezeigt wird, identifiziert wird, wobei die Anzeigeeinheit einen Eingangsdaten-Anzeigebereich hat, in welchem ein solcher eingegebener Identifizierungscode angezeigt wird.

4. Steuerungsvorrichtung nach Anspruch 1, 2 oder 3, dadurch gekennzeichnet, daß die Anzeigemittel derart betreibbar sind, daß sie eine Kopieroperations-Endposition, die ein Parameter ist, der dazu benutzt wird, eine ausgewählte Kopieroperation zu bestimmen, während jeder Ablauffolge der ausgewählten Kopieroperation anzeigen.

5. Steuerungsvorrichtung nach einem der vorhergehenden Ansprüche, dadurch gekennzeichnet, daß die Anzeigemittel selektiv betreibbar sind, um zumindest einen von folgenden Werten, nämlich einen Verschiebungswert $\varepsilon$, einen Verschiebungsfehlersignalwert $\varepsilon - \varepsilon 0$, einen Z-Achsen-Verschiebungswert und einen Schwerkraft-Achsen-Verschiebungswert, für den Kopierkopf (TR) anzuzeigen.

6. Steuerungsvorrichtung nach einem der vorhergehenden Ansprüche, dadurch gekennzeichnet, daß ein Analog/Digital-Wandler (AD) zum Aufnehmen von Verschiebungssignalen ($\varepsilon x$, $\varepsilon y$, $\varepsilon z$) von dem Kopierkopf (TR) zum Wandeln derselben in digitale Daten vorgesehen ist, daß Zähler (CTx, CTy, CTz) zum Aufnehmen von Positionsinformation, die die Position eines Kopierkopfes (TR) angibt, vorgesehen sind, daß ein Tastenfeld (KB) zum Eingeben von Daten in die Steuerungsvorrichtung vorgesehen ist, daß ein Formatspeicher (M3) zum Speichern von Formatinformation, die für jede aus der Vielzahl von Kopierbetriebsarten das Format der Parameter des Satzes zum Bestimmen einer ausgewählten Kopieroperation für die Kopierbetriebsart angibt, vorgesehen ist, der wirksam mit den

Kopierbetriebsart-Auswahlmitteln und den Anzeigemitteln verbunden ist, daß Datenspeicher (M4, CM) zum Aufnehmen und Speichern von Daten, die über das Tastenfeld eingegeben werden, vorgesehen sind, daß eine Prozessoranordnung (CPU, MO) vorgesehen ist, die derart betriebbar ist, daß sie Programme speichert und selektiv Befehle in Übereinstimmung mit einem Programm erzeugt, das mit einer ausgewählten Kopierbetriebsart korrespondiert, wobei die Prozessoranordnung wirksam mit den Anzeigemitteln, dem Analog/Digital-Wandler, den Zählern, dem Tastenfeld und den Datenspeichern zum Aufnehmen von Information und Daten daraus und zum Aufnehmen von Programmdaten von dem Tastenfeld her verbunden ist, und daß eine Datenausgabeeinheit (DO) vorgesehen ist, die wirksam mit der Prozessoranordnung und den Kopierbetriebsart-Auswahlmitteln zur Übergabe von Befehlen aus der Prozessoranordnung zum Steuern des Kopierkopfes in Abhängigkeit von dem ausgewählten Programm, den Daten, die in den Datenspeichern gespeichert sind, und den Daten und der Information aus dem Analog/Digital-Wandler und den Zählern verbunden ist.

7. Steuerungsvorrichtung nach Anspruch 6, dadurch gekennzeichnet, daß die Prozessoranordnung und die Anzeigemittel selektiv derart zu betreiben sind, daß Programmdaten durch die Anzeigemittel angezeigt werden.

8. Steuerungsvorrichtung nach Anspruch 7, dadurch gekennzeichnet, daß eine Eingabetaste (262) vorgesehen ist, die wirksam mit dem Tastenfeld, den Anzeigemitteln, der Prozessoranordnung und den Datenspeichern zum Übergeben von Parameterwerten oder Programmdaten, die durch die Anzeigemittel angezeigt werden, an einen Speicher oder an die Prozessoranordnung auf die Betätigung der Eingabetaste hin verbunden ist, und daß die Anzeigemittel derart betreibbar sind, daß sie die Daten unmittelbar anzeigen, die über das Tastenfeld eingegeben werden.

9. Steuerungsvorrichtung nach Anspruch 6, 7 oder 8, dadurch gekennzeichnet, daß desweiteren manuelle Steuerungsmittel (202 ... 204) vorgesehen sind, die betätigbar sind, um eine gewünschte Richtung der Bewegung des Kopierkopfes zu bestimmen, und daß die Datenausgabeeinheit wirksam damit zum Übertragen geeigneter Steuersignale in Abhängigkeit von der bestimmten Richtung der Bewegung verbunden ist.

10. Steuerungsvorrichtung nach Anspruch 6, 7, 8 oder 9, dadurch gekennzeichnet, daß eine Einstelltaste (234) vorgesehen ist, die wirksam mit den Zählern zum Übertragen von Positionsinformation daraus zu dem Speicher aufgrund der Betätigung der Einstelltaste verbunden ist.

11. Steuerungsvorrichtung nach Anspruch 6, 7, 8, 9 oder 10, dadurch gekennzeichnet, daß die Anzeigemittel unter anderem dazu bestimmt sind, ein Cursoelement anzuzeigen, und daß eine Steuereinheit (CRTC usw.) als Cursor-Steuereinheit in der Anzeigeeinheit enthalten ist, die wirksam mit der Prozessoranordnung und dem Tastenfeld zum Steuern der Position des Cursorelements bei dem betreffenden Anzeigemittel verbunden ist, wobei die Position des Cursorelements den Parameter anzeigt, für den ein Wert von dem Tastenfeld her einzugeben ist.

12. Steuerungsvorrichtung nach Anspruch 6, dadurch gekennzeichnet, daß ein Zeichenspeicher (CM) zur Speicherung von Information zum Anzeigen von Parametern in Formaten, die passend dafür sind, vorgesehen ist, daß ein Zeichenadressenzähler (CAC) zur Adressierung der Speicherplätze in dem Zeichenspeicher zum Einschreiben derartiger Information vorgesehen ist, daß eine Steuereinheit (CRTC) zur Adressierung der Speicherplätze in dem Zeichenspeicher zum Auslesen derartiger Information zu deren Anzeige vorgesehen ist und daß ein Zeichengenerator zum Erzeugen von Anzeigezeichen in Übereinstimmung mit einer derartig ausgelesenen Information vorgesehen ist.

## Revendications

1. Dispositif de commande de copiage capable de fonctionner sélectivement selon un ensemble de modes de copiage pour copier un modèle (MDL), comprenant:

des moyens (DG, ADD, ARN, ART, etc) pour calculer une direction de copiage et une vitesse de copiage à partir de signaux de déplacement ($\varepsilon x$, $\varepsilon y$, $\varepsilon z$) d'un palpeur (TR) explorant la surface du modèle pendant une opération de copiage sélectionnée correspondant à l'un sélectionné des modes de copiage;

des moyens de sélection de mode de copiage (OPP, 201, 221, 225 à 230, etc) pour sélectionner l'un des modes de l'ensemble de modes de copiage; et

des moyens (241 à 262, etc) pour régler sélectivement la valeur de chaque paramètre d'un jeu de paramètres respectif, pour définir une opération de copiage sélectionnée pour un mode de copiage sélectionné;

caractérisé en ce que le dispositif comprend en outre des moyens d'affichage (DPL, etc) destinés à afficher un jeu de paramètres respectif pour définir une opération de copiage sélectionnée pour un mode de copiage sélectionné;

les moyens de réglage de valeur de paramètres (241 à 262, etc) pouvant être actionnés de façon à régler les valeurs des paramètres du jeu concerné, pendant l'affichage de ces paramètres sur les moyens d'affichage.

2. Dispositif de commande de copiage selon la revendication 1, dans lequel on peut faire fonctionner les moyens d'affichage de façon à afficher des limites de copiage, c'est-à-dire des

paramètres qui sont utilisés pour définir une opération de copiage sélectionnée, sous la forme d'un diagramme de zone.

3. Dispositif de commande de copiage selon la revendication 1 ou 2, dans lequel on peut faire fonctionner les moyens d'affichage de façon à afficher un code d'identification en correspondance avec chaque paramètre affiché, et dans lequel un paramètre dont la valeur doit être réglée par les moyens de réglage de valeur de paramètres est identifié par l'introduction du code d'identification affiché en correspondance avec le paramètre concerné, les moyens d'affichage comportant une zone d'affichage de données d'entrée dans laquelle un tel code d'identification d'entrée est affiché.

4. Dispositif de commande de copiage selon la revendication 1, 2 ou 3, dans lequel on peut faire fonctionner les moyens d'affichage de façon à afficher une position de fin d'opération de copiage, c'est-à-dire un paramètre qui est utilisé pour définir une opération de copiage sélectionnée, pendant chaque séquence de l'opération de copiage sélectionnée.

5. Dispositif de commande de copiage selon l'une quelconque des revendications précédentes, dans lequel on peut faire fonctionner sélectivement les moyens d'affichage de façon à afficher l'un au moins des paramètres suivants: une valeur de déplacement $\varepsilon$, un signal d'erreur de déplacement $\varepsilon - \varepsilon o$, une value de déplacement selon l'axe Z et une valeur de déplacement selon un axe de gravité pour le palpeur (TR).

6. Dispositif de commande de copiage selon l'une quelconque des revendications précédentes, comprenant:

un convertisseur analogique-numérique (AD) conçu de façon à recevoir des signaux de déplacement ($\varepsilon x$, $\varepsilon y$, $\varepsilon z$) provenant du palpeur (TR), pour les convertir en données numériques,

des compteurs (CTx, CTy, CTz) destinés à recevoir une information de position indiquant la position d'un palpeur (TR);

un clavier (KB) pour l'entrée de données dans le dispositif;

une mémoire de format (M3), destinée à enregistrer une information de format indiquant, pour chaque mode de l'ensemble de modes de copiage, le format de chacun des paramètres du jeu définissant une opération de copiage sélectionnée pour le mode de copiage, cette mémoire étant connectée fonctionnellement aux moyens de sélection de mode de copiage et aux moyens d'affichage;

une mèmoire de données (M4, CM) destinée à recevoir et à enregistrer des données introduites par le clavier;

des moyens à processeur (CPU, MO) capables d'enregistrer des programmes et de générer sélectivement des ordres conformément à un programme correspondant à un mode de copiage sélectionné, ces moyens à processeur étant connectés fonctionnellement aux moyens d'affichage, au convertisseur analogique-nuvérique, aux compteurs, au clavier et à la mémoire de données, pour recevoir à partir d'eux de l'information et des données, et pour recevoir des données de programme à partir du clavier; et

des moyens de sortie de données (DO) connectés fonctionnellement aux moyens à processeur et aux moyens de sélection de mode de copiage pour transmettre des ordres à partir des moyens à processeur, afin de commander le palpeur sous la dépendance du programme sélectionné, des données enregistrées dans la mémoire de données et des données et de l'information provenant du convertisseur analogique-numérique et des compteurs.

7. Dispositif de commande de copiage selon la revendication 6, dans lequel on peut faire fonctionner sélectivement les moyens à processeur et les moyens d'affichage de façon à afficher des données de programme sur les moyens d'affichage.

8. Dispositif de commande de copiage selon la revendication 7, comprenant des moyens équipés d'un bouton d'entrée (262), connectés fonctionnellement au clavier, aux moyens d'affichage, aux moyens à processeur et à la mémoire de données, pour transmettre à la mémoire ou aux moyens à processeur des valeurs de paramètre ou des données de programme affichées sur les moyens d'affichage, sous l'effet de la manoeuvre des moyens équipés d'un bouton d'entrée, les moyens d'affichage étant capables d'afficher immédiatement des données introduites au clavier.

9. Dispositif de commande de copiage selon la revendication 6, 7 ou 8, comprenant en outre des moyens de commande manuelle (202 à 204) qu'on peut faire fonctionner pour spécifier une direction de mouvement désirée du palpeur, les moyens de sortie de données étant connectés fonctionnellement à ces moyens de commande manuelle pour transmettre des signaux de commande appropriés sous la dépendance de la direction de mouvement spécifiée.

10. Dispositif de commande de copiage selon la revendication 6, 7, 8, ou 9, comprenant des moyens équipés d'un bouton de fixation de valeur (234), connectés fonctionnellement aux compteurs pour transmettre vers la mémoire une information de position provenant de ces derniers, sous l'effet de la manoeuvre des moyens équipés d'un bouton de fixation de valeur.

11. Dispositif de commande de copiage selon la revendication 6, 7, 8, 9 ou 10, dans lequel les moyens d'affichage sont conçus de façon à afficher un élément de curseur et comprennent des moyens de commande de curseur (CRTC, etc) connectés fonctionnellement aux moyens à processeur et au clavier, pour commander la position de l'élément de curseur sur l'affichage, la position de l'élément de curseur indiquant la paramètre dont une valeur doit être introduite par le clavier.

12. Dispositif de commande de copiage selon la revendication 6, comprenant une mémoire de

caractères (CM) destinée à enregistrer une information pour l'affichage de paramètres avec les formats appropriés à ceux-ci,

un compteur d'adresse de caractères (CAC) destiné à adresser des positions de mémoire dans la mémoire de caractères, pour écrire une telle information dans ces positions,

une unité de commande (CRTC) destinée à adresser des positions de mémoire dans la mémoire de caractères, pour lire une telle information en vue de l'affichage,

un générateur de caractères destiné à générer des caractères d'affichage conformément à une telle information lue.

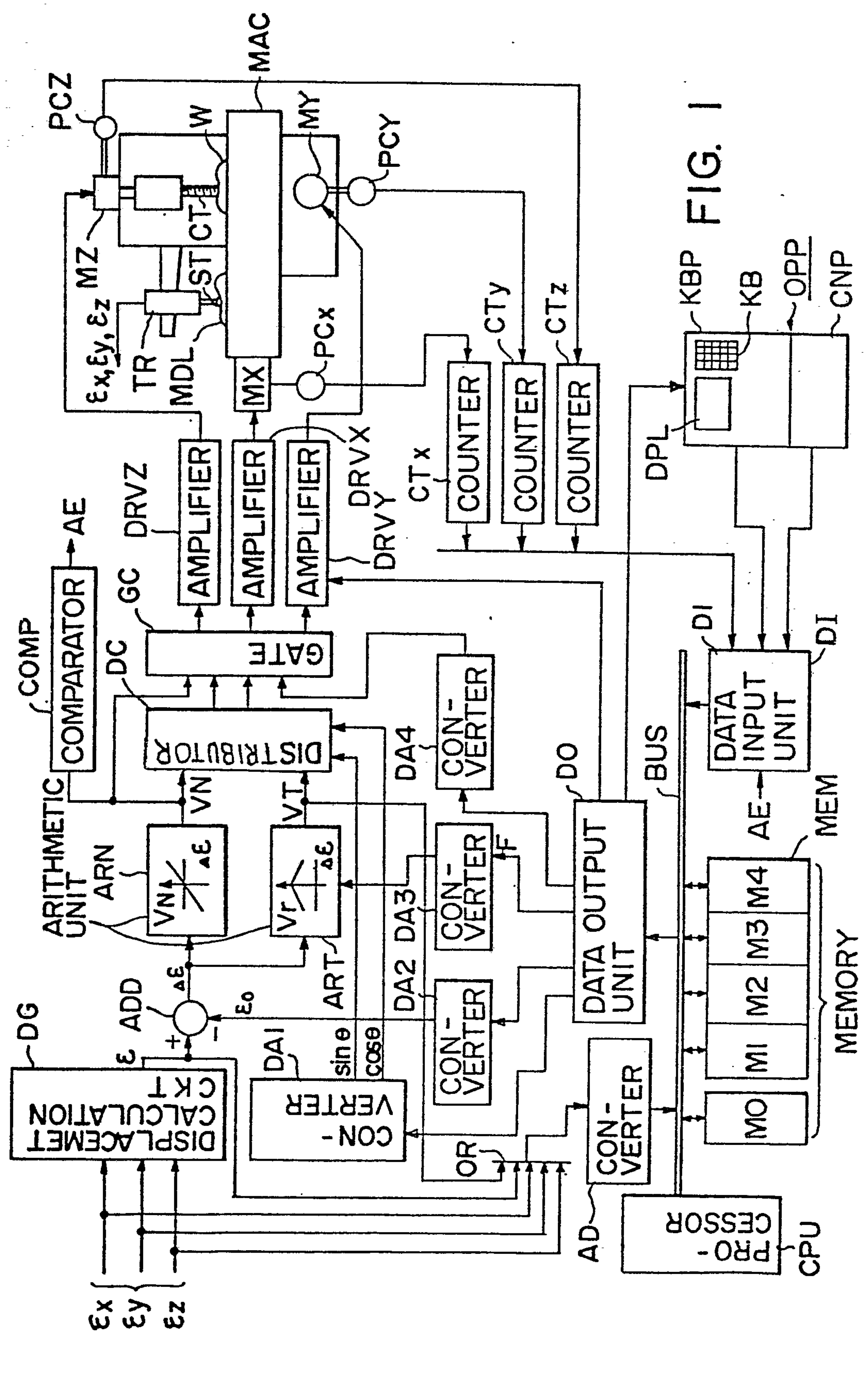
MAC
PCZ
W
MY
PCY
MZ
CT
ST
εx, εy, εz
TR
MDL
MX
PCx
DRVZ
DRVX
DRVY
AMPLIFIER
AMPLIFIER
AMPLIFIER
CTx
CTy
CTz
COUNTER
COUNTER
COUNTER
KBP
KB
OPP
CNP
DPL
COMP
COMPARATOR
AE
GC
GATE
DC
DISTRIBUTOR
DI
DATA INPUT UNIT
ARITHMETIC UNIT
ARN
VN
VT
Vr
ΔE
ART
DA4
CON-VERTER
DA2
DA3
CON-VERTER
CON-VERTER
F
DO
DATA OUTPUT UNIT
BUS
AE
MEM
M4
M3
M2
M1
MO
MEMORY
DG
DISPLACEMET CALCULATION CKT
ε
ADD
ε0
DA1
sinθ
cosθ
CON-VERTER
OR
CON-VERTER
AD
PRO-CESSOR
CPU
εx
εy
εz

FIG. 1

FIG. 2

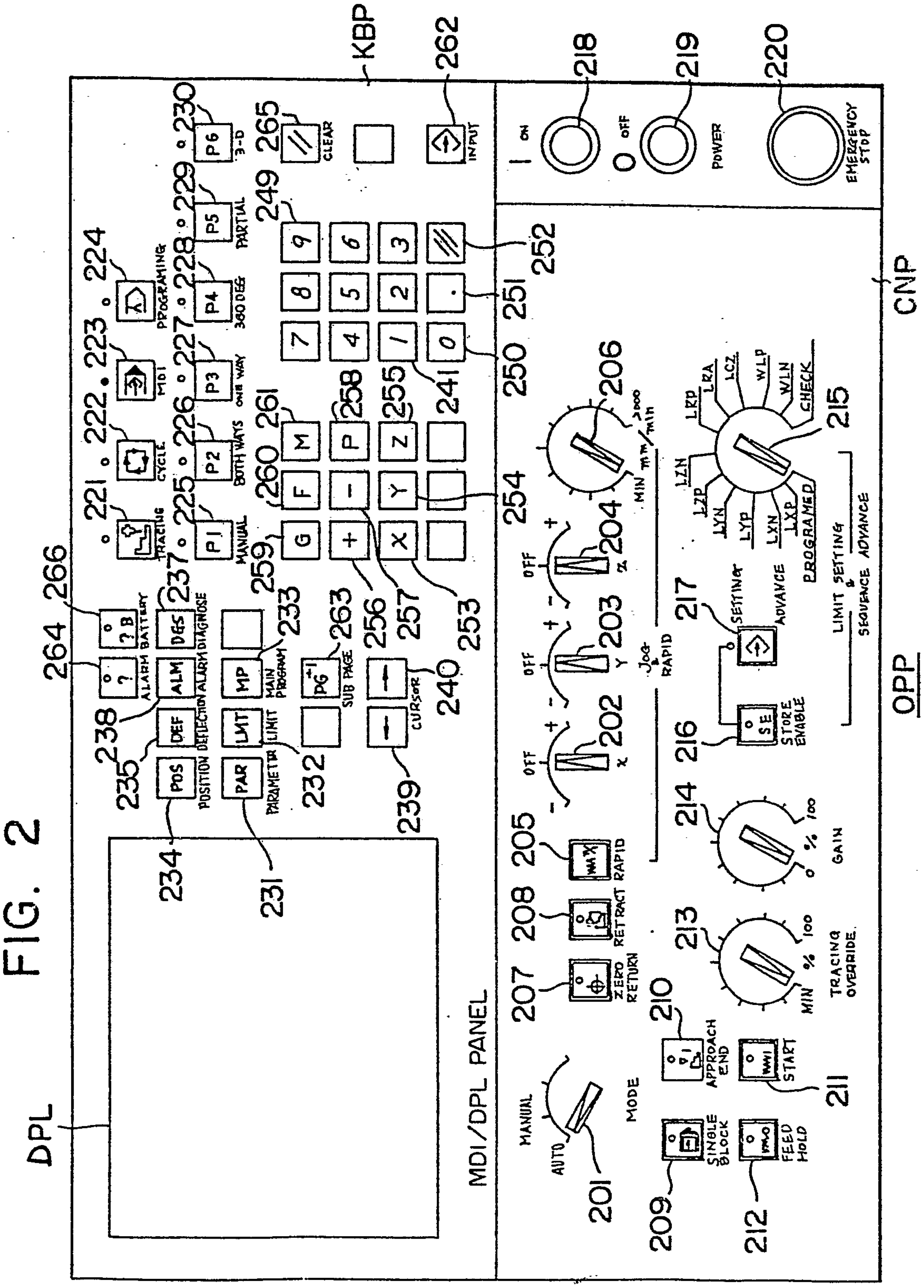
DPL
MDI/DPL PANEL
KBP
CNP
OPP
POSITION
DEFLECTION
ALARM
DIAGNOSE
ALARM
BATTERY
PARAMETER
LIMIT
MAIN PROGRAM
SUB PAGE
CURSOR
TRACING
CYCLE
MDI
PROGRAMING
MANUAL
BOTH WAYS
ONE WAY
360 DEG
PARTIAL
3-D
CLEAR
INPUT
ON
OFF
POWER
EMERGENCY STOP
MANUAL
AUTO
MODE
SINGLE BLOCK
FEED HOLD
APPROACH END
START
ZERO RETURN
RETRACT
RAPID
TRACING OVERRIDE
GAIN
JOG & RAPID
STORE ENABLE
SETTING
ADVANCE
LIMIT SETTING & SEQUENCE ADVANCE
PROGRAMED
CHECK

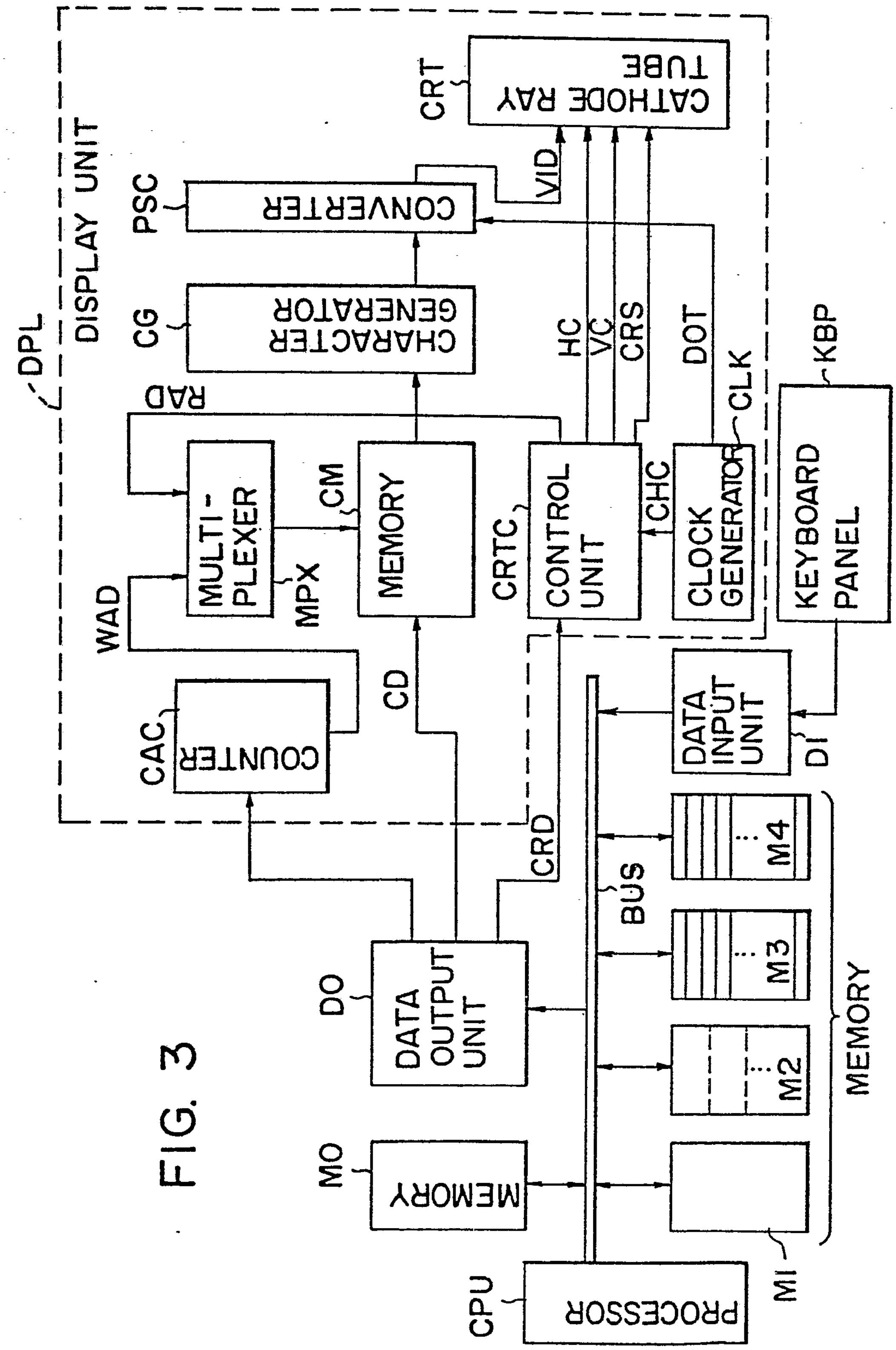
DPL
DISPLAY UNIT
CRT
CATHODE RAY TUBE
PSC
CONVERTER
VID
CG
CHARACTER GENERATOR
RAD
HC
VC
CRS
DOT
CLK
KBP
MULTI-PLEXER
MPX
CM
MEMORY
CRTC
CONTROL UNIT
CHC
CLOCK GENERATOR
KEYBOARD PANEL
WAD
CAC
COUNTER
CD
DATA INPUT UNIT
DI
CRD
BUS
M4
M3
M2
MEMORY
DO
DATA OUTPUT UNIT
MO
MEMORY
CPU
PROCESSOR
MI

FIG. 3

FIG. 4

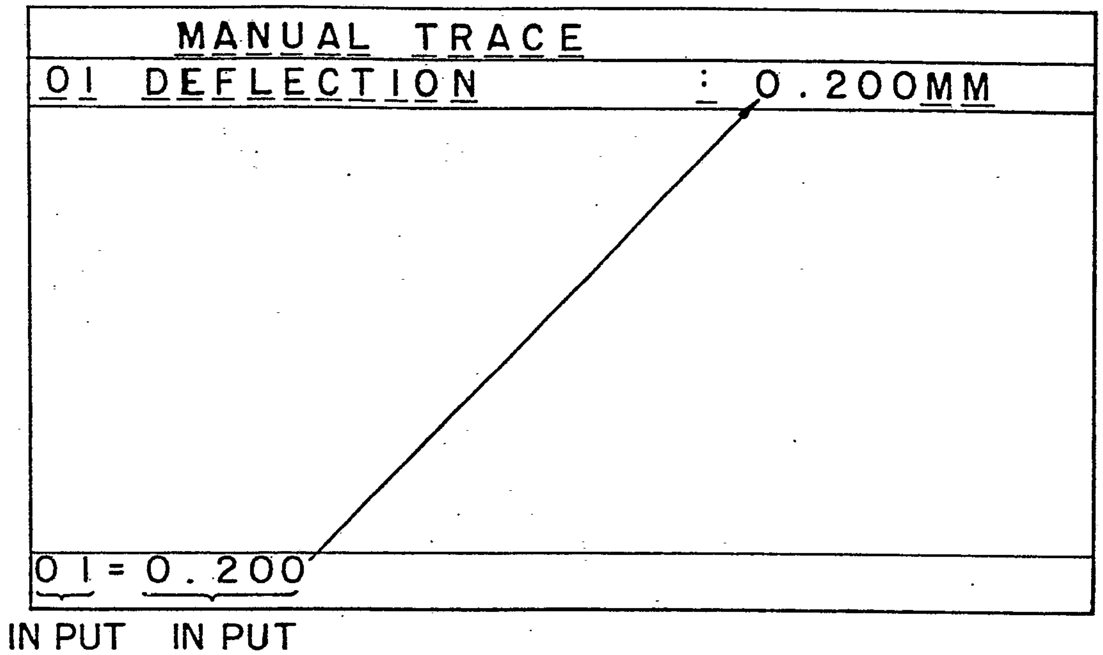
MANUAL TRACE
01 DEFLECTION : 0.200MM
01 = 0.200
IN PUT
IN PUT

FIG. 5

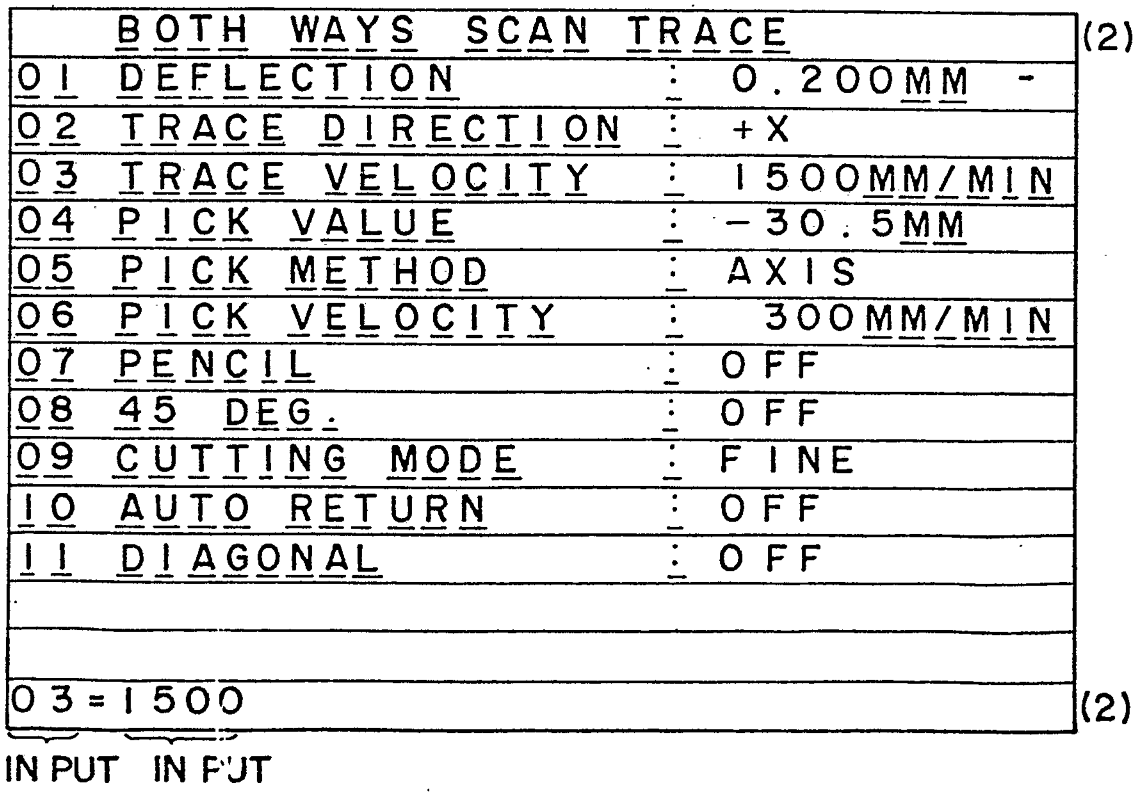
BOTH WAYS SCAN TRACE
(2)
01 DEFLECTION : 0.200MM -
02 TRACE DIRECTION : +X
03 TRACE VELOCITY : 1500MM/MIN
04 PICK VALUE : -30.5MM
05 PICK METHOD : AXIS
06 PICK VELOCITY : 300MM/MIN
07 PENCIL : OFF
08 45 DEG. : OFF
09 CUTTING MODE : FINE
10 AUTO RETURN : OFF
11 DIAGONAL : OFF
03 = 1500
(2)
IN PUT
IN PUT

FIG. 6

| |
|---|
| 02 = +X / -X / +Y / -Y |

FIG. 7

| | | | |
|---|---|---|---|
| | ONE WAY SCAN TRACE | | |
| 01 | DEFLECTION | : | 0.200MM |
| 02 | TRACE DIRECTION | : | +X |
| 03 | TRACE VELOCITY | : | 1500MM/MIN |
| 04 | PICK VALUE | : | -30.5MM |
| 05 | PICK METHOD | : | AXIS |
| 06 | PICK VELOCITY | : | 300MM/MIN |
| 07 | PENCIL | : | OFF |
| 08 | 45 DEG | : | OFF |
| 09 | CUTTING MODE | : | FINE |
| 10 | AUTO RETURN | : | ON |
| 11 | UPWARD TRACING | : | OFF |
| 12 | SLOW APPROACH | : | Z |
| | | | |
| | | | |

(2)

FIG. 8

(2)

| | | |
|---|---|---|
| | 360 DEG. CONTOUR TRACE | |
| 01 | DEFLECTION | : 0.200MM |
| 02 | TRACE DIRECTION | : LEFT |
| 03 | TRACE VELOCITY | : 1500MM/MIN |
| 04 | PICK VALUE | : +30.5MM |
| 05 | PICK METHOD | : AXIS |
| 06 | PICK VELOCITY | : 300MM/MIN |
| 07 | Z AXIS PICK | : OFF |
| 08 | PENCIL | : OFF |
| 09 | CUTTING MODE | : FINE |
| 10 | AUTO RETURN | : ON |

FIG. 9

(2)

| | | |
|---|---|---|
| | PARTIAL CONTOUR TRACE | |
| 01 | DEFLECTION | : 0.200MM |
| 02 | TRACE DIRECTION | : RIGHT |
| 03 | TRACE VELOCITY | : 1500MM/MIN |
| 04 | PICK VALUE | : +30.5MM |
| 05 | PICK METHOD | : AXIS |
| 06 | PICK VELOCITY | : 300MM/MIN |
| 07 | PENCIL | : OFF |
| 08 | CUTTING MODE | : FINE |
| 09 | AUTO RETURN | : ON |

(2)

FIG. 10

| | | | |
|---|---|---|---|
| | 3-DIMENSIONAL TRACE | | (2) |
| 01 | DEFLECTION | : 0.500MM | (2) |
| 02 | TRACE DIRECTION | : LEFT | (2) |
| 03 | TRACE VELOCITY | : 500MM/MIN | (2) |
| 04 | Z-DEFLECTION | : 0.100MM | (2) |
| 05 | PENCIL | : OFF | (2) |
| 06 | AUTO RETURN | : ON | (2) |

FIG. 11

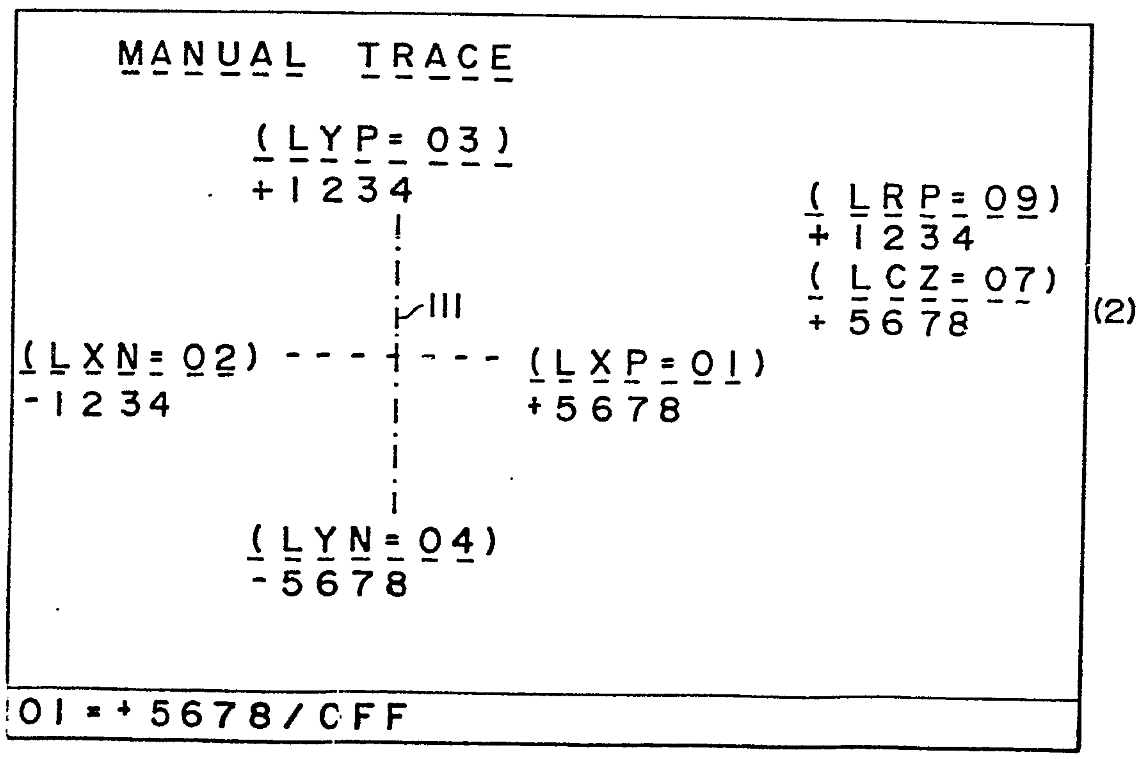

FIG. 12

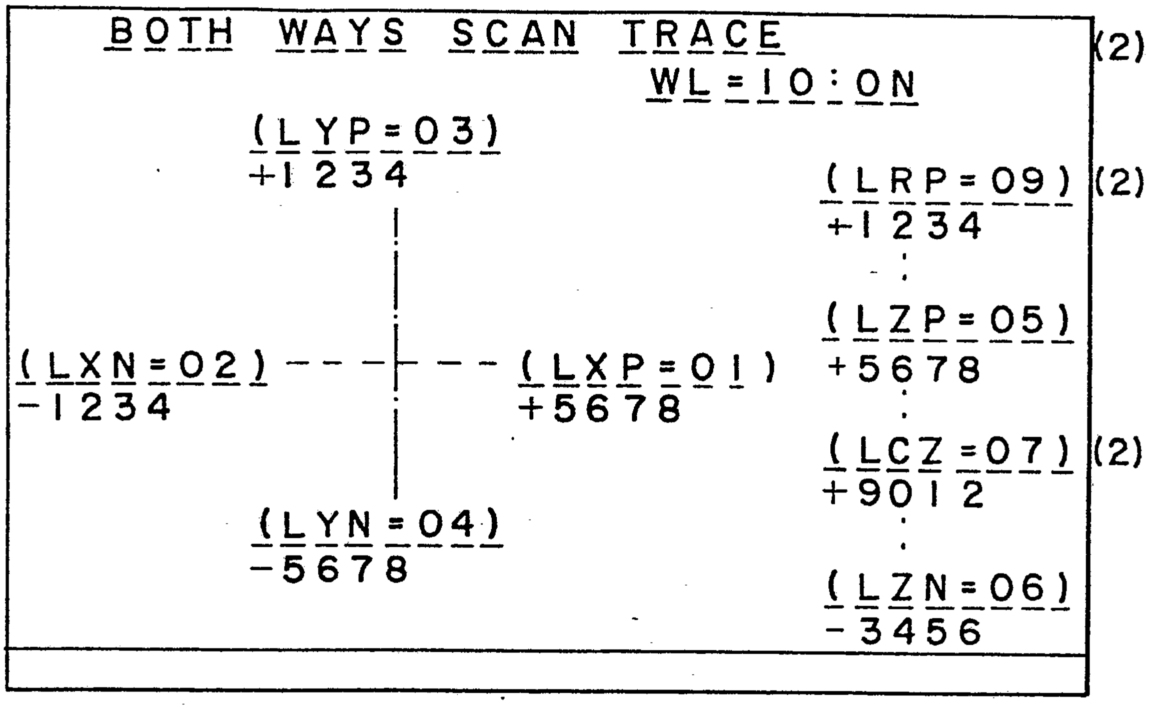
BOTH WAYS SCAN TRACE
(2)
WL = 10 : ON
(LYP = 03)
+1234
(LRP = 09)
(2)
+1234
(LZP = 05)
+5678
(LXN = 02)
-1234
(LXP = 01)
+5678
(LCZ = 07)
(2)
+9012
(LYN = 04)
-5678
(LZN = 06)
-3456

FIG. 13

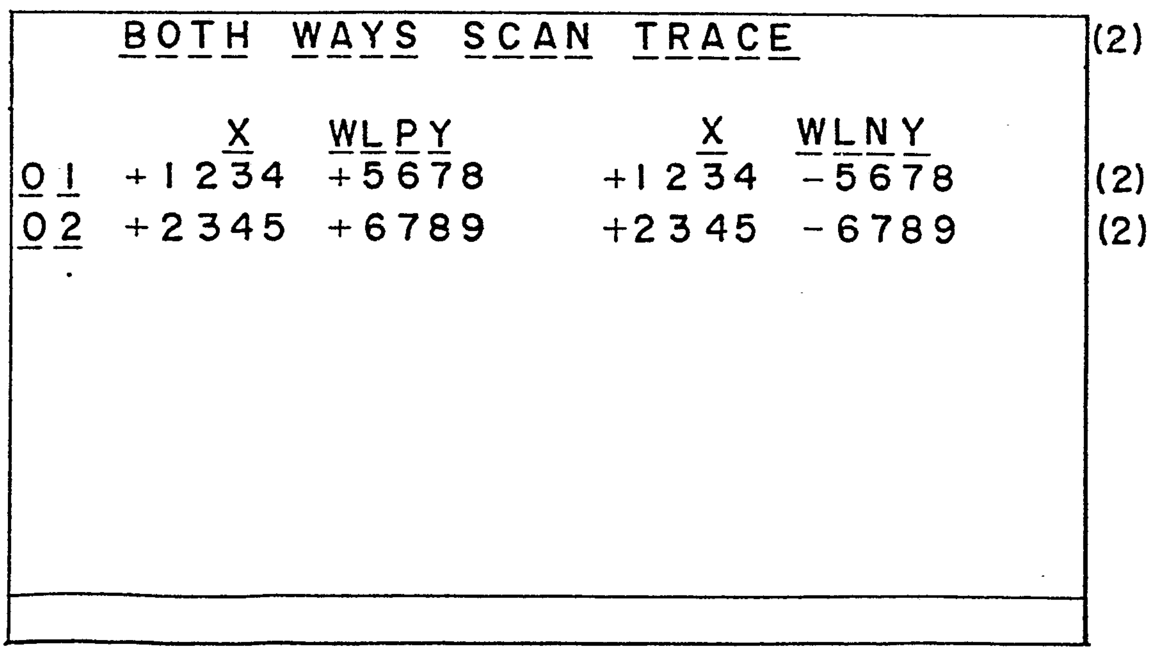
BOTH WAYS SCAN TRACE
(2)
X WLPY X WLNY
01 +1234 +5678 +1234 -5678
(2)
02 +2345 +6789 +2345 -6789
(2)

FIG. 14

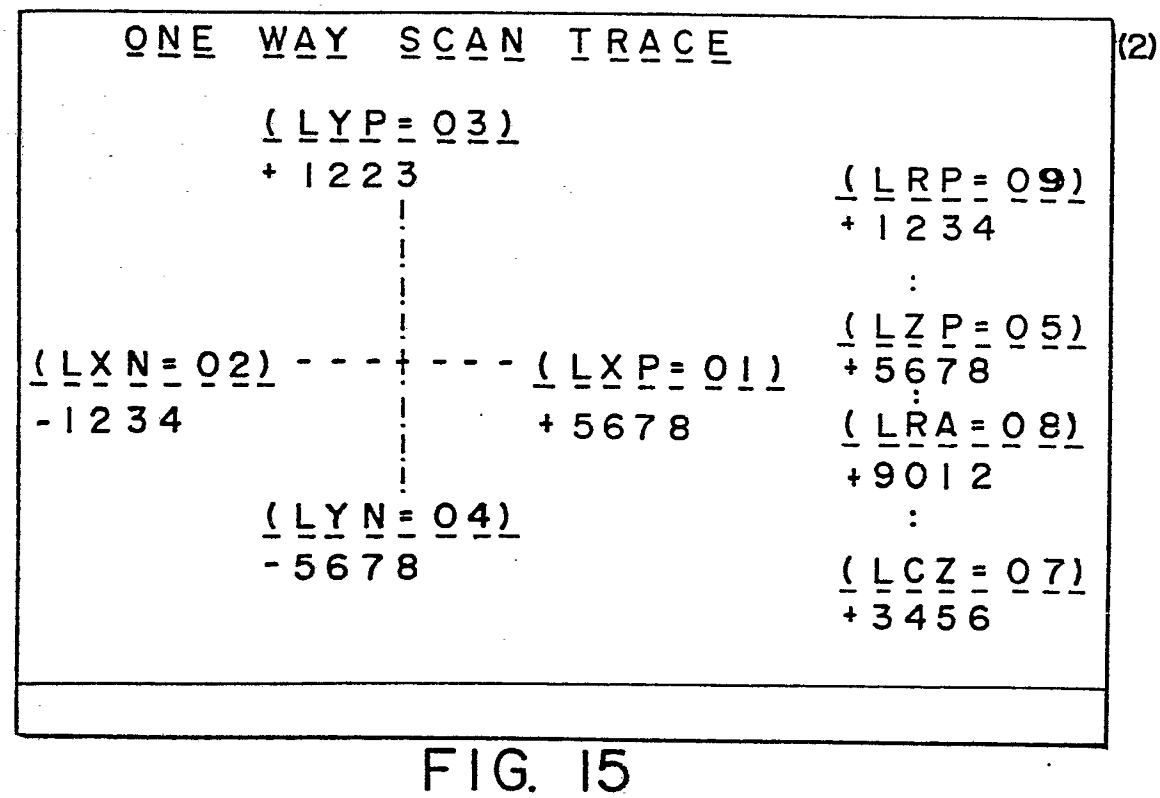
ONE WAY SCAN TRACE
(LYP=03)
+1223
(LRP=09)
+1234
(LZP=05)
+5678
(LXN=02)
-1234
(LXP=01)
+5678
(LRA=08)
+9012
(LYN=04)
-5678
(LCZ=07)
+3456
(2)

FIG. 15

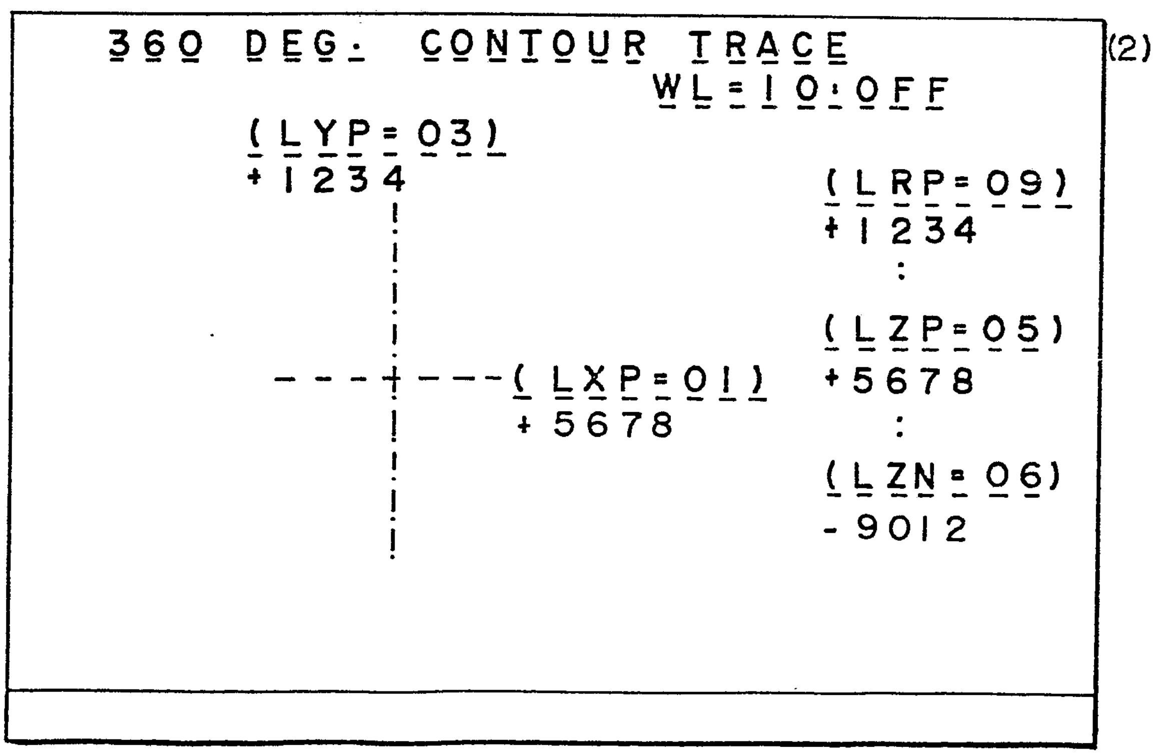
360 DEG. CONTOUR TRACE
WL=10:OFF
(LYP=03)
+1234
(LRP=09)
+1234
(LZP=05)
+5678
(LXP=01)
+5678
(LZN=06)
-9012
(2)

FIG. 16

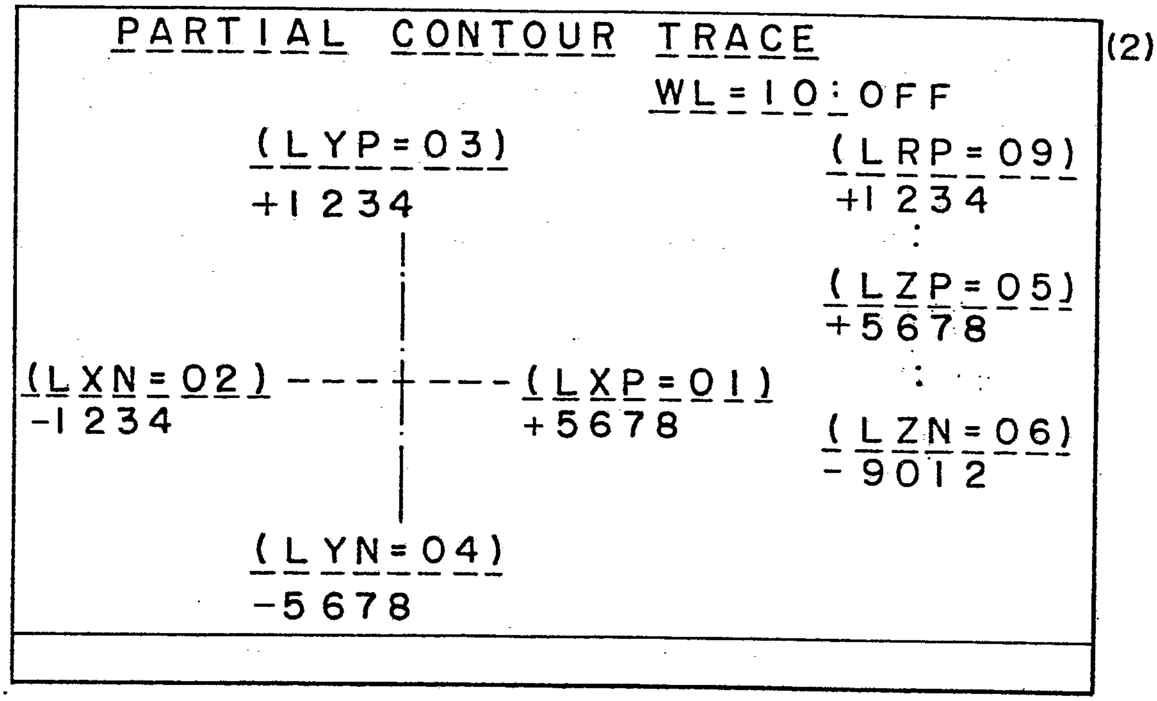
PARTIAL CONTOUR TRACE
WL=10:OFF
(LYP=03)
+1234
(LRP=09)
+1234
(LZP=05)
+5678
(LXN=02)
-1234
(LXP=01)
+5678
(LZN=06)
-9012
(LYN=04)
-5678
(2)

FIG. 17

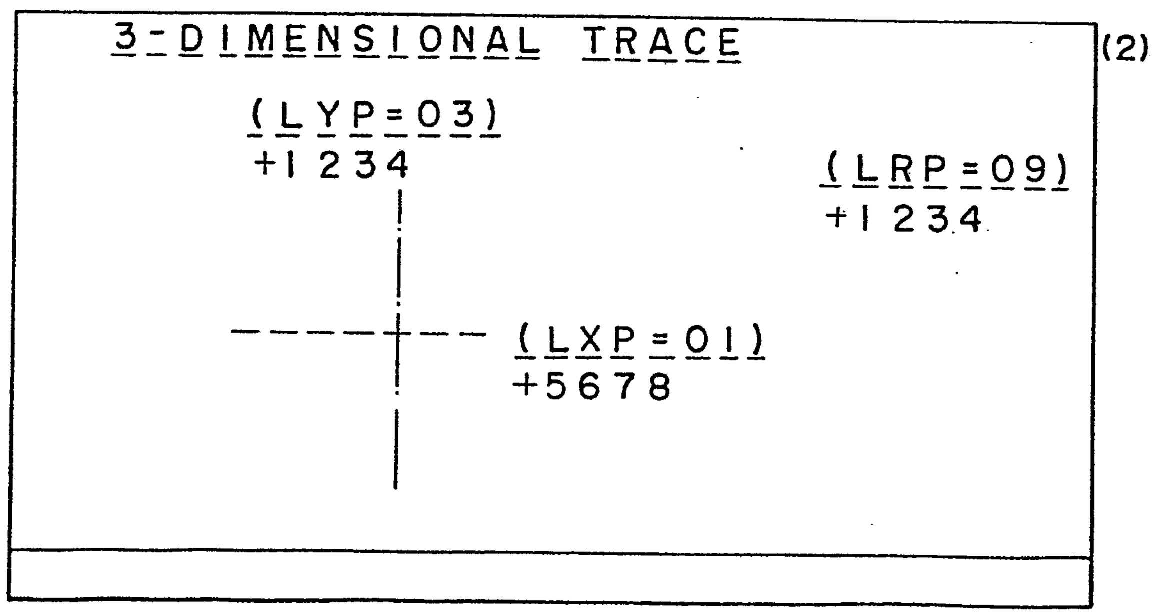
3-DIMENSIONAL TRACE
(LYP=03)
+1234
(LRP=09)
+1234
(LXP=01)
+5678
(2)

# FIG. 18

| | | | |
|---|---|---|---|
| MAIN PROGRAM 01 | | | |
| 01 | G00X1234.56 | | |
| 02 | G01Y2345.67F1000 | | |
| 03 | G10P2 | | |
| 04 | DEFLECTION: | MM(Note 1) | (2) |
| 05 | LCZ : 99 1234 | (Note 2) | |
| 06 | F : MM/MIN | | |
| 07 | CUTTING MODE : | | |
| 08 | APPROACH : -Z | (Note 3) | |
| 09 | G10P2 | | |
| 10 | DEFLECTION : 0.600MM | | |
| 11 | LCZ : | | |
| 12 | F : 1000MM/MIN | | |

# FIG. 19

| | | |
|---|---|---|
| MAIN PROGRAM 02 | | |
| 13 | CUTTING MODE : FINE | (2) |
| 14 | APPROACH : -Z | |
| 15 | G00Y1234.56 | |
| 16 | G01Z2345.67 | |
| 17 | G11X+1234.56Y+2345.67P100.00 | |
| 18 | F200 | |
| 19 | M02 | |

FIG. 20

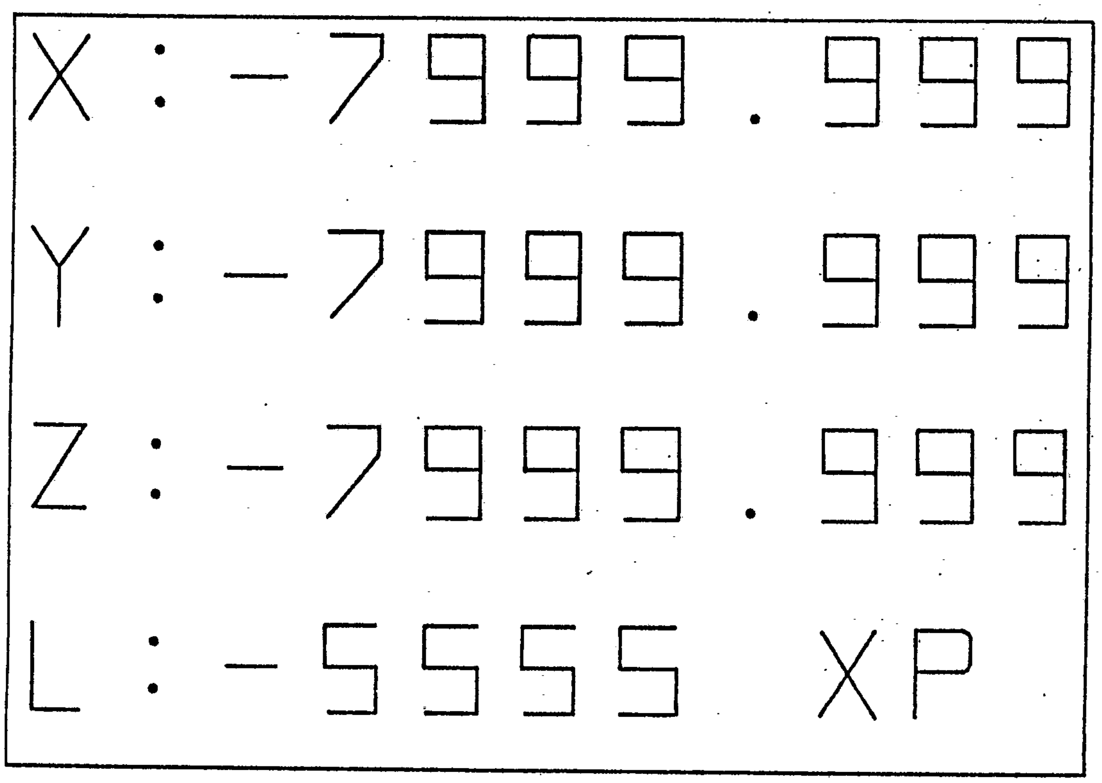

FIG. 21

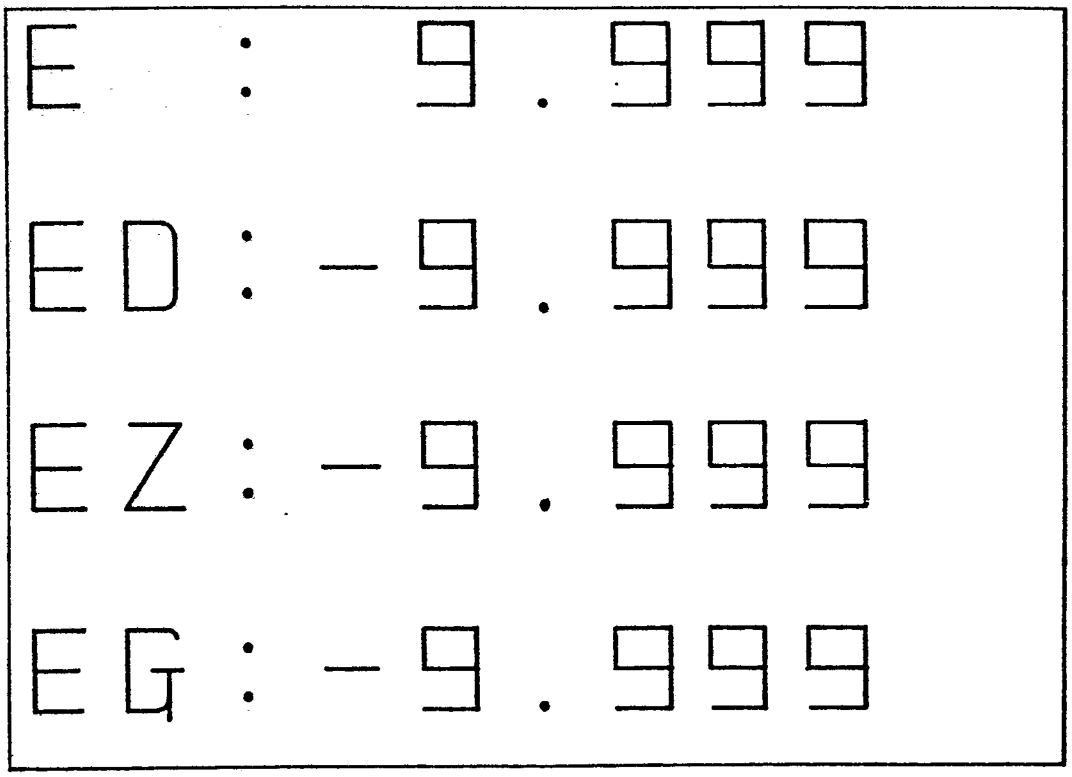
E : 9.999
ED:-9.999
EZ:-9.999
EG:-9.999

FIG. 22

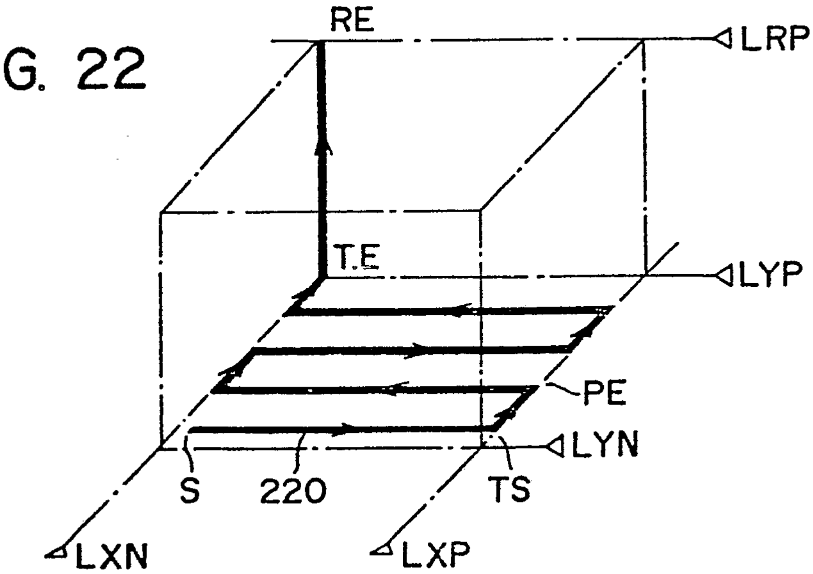
RE
LRP
T.E
LYP
PE
LYN
S
220
TS
LXN
LXP